# EUROPEAN PATENT APPLICATION

(11) **EP 4 351 178 A1**
(43) Date of publication of application: **10.04.2024**
(21) Application number: 22199984.0
(22) Date of filing: 06.10.2022
(51) Int. Cl.: H04W 4/12, H04W 4/40

(54) **METHOD FOR PROVIDING AN OBJECT MESSAGE, MESSAGE GENERATION DEVICE AND METHOD FOR GENERATING A SURROUNDINGS MODEL OF A PARTICIPANT**

(71) Applicant: Robert Bosch GmbH, 70442 Stuttgart (DE)
(72) Inventor: Schiegg, Florian Alexander, 31139 Hildesheim (DE); Frye, Tobias, 38102 Braunschweig (DE); Geraldy, Alexander, 31141 Hildesheim (DE)

(57) **Abstract**

The invention relates to a method for providing an object message (101) comprising selected information (1001) about a surrounding region of a participant in a communication network comprising the following steps:
• acquiring (103) the selected information (1001) about the surrounding region, especially sensor data,
• Comparing (105) a calculated or estimated data size (1051) of the object message (101), comprising the acquired information (1001) about the surrounding region, with a given maximum data size (1050) of the transmittable object message (1010),
• if the calculated or estimated data size (1051) of the object message (101) exceeds the given maximum data size (1050), the method (100) comprises the following steps:
▪ Segmentation (109) of the surrounding region of the participant into at least a first subregion and a second subregion,
▪ Generating (111) a first transmittable object message segment (1110), at least comprising all of the selected information (1002) about the first subregion,
▪ Generating (112) a second transmittable object message segment (1120), at least comprising al of the selected information (1003) about the second subregion,
▪ Providing (110) the first transmittable object message segment (1110) and the second transmittable object message segment (1120) to be sent via the communication network (102).

## Description

### State of the art

DE 10 2019 218 916 A1 discloses a method for transmitting a message via a communication network wherein message segments to be transmitted are filtered according to their priority values.

### Core and advantages of the invention

As in other technology areas, connectivity is playing an increasingly important role in vehicle applications. More and more vehicles have the option of connecting to other road users, infrastructure components (such as so-called Roadside Units) or back-end services in the cloud (V2X=" vehicle-to-anything" communication; V2X communication comprises vehicle to vehicle (V2V), vehicle to infrastructure (V2I) and/or infrastructure to vehicle (I2V), or vehicle to network (V2N) and/or network to vehicle (N2V) communication.)

In particular, connectivity of vehicles with infrastructure-side systems has recently become more important. Systems on the infrastructure side can support vehicles in their driving tasks by providing additional information, e.g., sensors on the roadside or data servers, which the on-board sensors of the vehicle cannot generate themselves or can generate only to a limited extent. This infrastructure-generated additional information can be a list of recognized objects which can be transmitted to the vehicles or other road users using a so-called object message, especially a Collective Perception Message (CPM). The CPM offers Intelligent Transport Systems-Stations (ITS-S) the possibility to share information about objects in the surroundings, which have been detected by sensors (f. ex radar, LIDAR, cameras, etc.) or other information sources of the transmitting road user. The CPM comprises information about the disseminating ITS-S itself, its sensory capabilities, and its detected/ recognized objects. For this purpose, the CPM provides generic data elements to describe detected objects in the reference frame of the disseminating ITS-S.

Collective perception is a concept of sharing the perceived surroundings of a station based on perception sensors. In other words, it is a concept of actively exchanging locally perceived objects between different ITS-Ss, especially vehicle or roadside ITS-Ss equipped with sensors such as, for example, video cameras, radar, or LIDAR sensors, by means of object messages, especially CPMs, using V2X communication technology.

The European Telecommunications Standards Institute (ETSI) is currently proposing a "Collective Perception Service" (CPS) comprising a definition of the "Collective Perception Message" (CPM) for standardization in Europe. The collective perception is based on object messages about the instantaneous surroundings of the road user being sent to other connected stations, such as for example other vehicles, pedestrians or infrastructure elements, via V2X communication, or being received from the connected stations, as described, for example, in ETSI TR 103 562, Intelligent Transport System (ITS); Vehicular Communications; Basic Set of Applications; Analysis of the Collective Perception Service (CPS). The American Society of Automotive Engineers (SAE) is currently proposing a comparable mechanism providing a Sensor Sharing Service (SSS) and Sensor Sharing Message (SSM).

The invention described hereafter is particularly relevant for CPMs of infrastructure systems, but also applicable to other stations and other messages, especially V2X-messages.

The present invention relates to a method for providing an object message, a message generation device, a method for generating a surroundings model of a participant, a use of the surroundings model, a vehicle comprising the message generation device, a computer program product and a computer-readable data carrier.

Advantages of the concept of collective perception comprises reducing the surroundings uncertainty of the participant with respect to its respective current surroundings in that a higher number of objects may be perceived, and the quality of the perceived/ recognized object data may be improved.

The service defines the Collective Perception Message (CPM) which allows for sharing of information about detected objects by the disseminating ITS-S. The CPM is transmitted cyclically with adaptive message generation rates to decrease the resulting channel load while focusing on reporting changes in the dynamic road environment. Optionally it can also be transmitted with fixed message generation rates.

If a V2X message, e. g. the CPM, becomes larger, for example because many objects have been detected, it may be necessary to divide the message into segments before transmission. These object message segments are then transmitted consecutively, whereby each individual object message segment can be delayed or lost during transmission. Only a subset of the sent object message segments is then available to the receiver.

In the current state of the art ("non-region-bound segmentation"), objects are filled into the message segments in an undefined order or following a defined priority metric, e.g., sorted by relevance, existence probability or time stamps. The receiver cannot generate an unambiguous surroundings model from the received segments, as all segments (also the lost segments) may contain parts of a required surrounding region. The receiver therefore cannot deduce which parts of the surroundings it has really received completely, and which are incomplete or missing. Even if the transmitter sends several CPM segments successively, and with losses of individual segments, the receiver may not be able to reliably calculate a complete surroundings model from any region, because parts of the region could have been lost with every message and when linking the different messages, it is not clear which parts are missing.

An advantage of the invention comprising the features of the independent claims is that every provided object message segment comprises a complete surroundings model of at least one region or subregion. For the receiver of the messages, e.g., a (partially) automated vehicle, it is important to recognize incomplete surroundings models, as he should know whether unknown objects could be present in the required region, if the receiver wishes to travel through this region, for example. An unknown object can lead to an accident. The invention allows for providing reliable information about a surrounding region of a participant, e. g. of a road user, a vehicle ITS-S, a roadside ITS-S, etc..

This is achieved by a method for providing an object message according to claim 1, comprising selected information about a surrounding region of a participant, in a communication network. Especially the participant is a transmitting participant that provides the object message for other participants. The method comprises the following steps:
- acquiring the selected information about the surrounding region, especially sensor data,
characterized in that a step providing a transmittable object message comprises the following steps:
- Comparing a calculated or estimated data size of the object message, comprising the selected information about the surrounding region, with a given maximum data size of the transmittable object message,
- if the calculated or estimated data size of the object message exceeds the given maximum data size, the method comprises the following steps:
   ▪ Segmentation of the surrounding region of the participant into at least a first subregion and a second subregion,
   ▪ Generating a first transmittable object message segment, at least comprising all of the selected information (especially at least all available information about the first subregion or at least all information selected for transmission about the first subregion) about the first subregion, comprising recognized objects in the first subregion and a geometric description of the first subregion,
   ▪ Generating a second transmittable object message segment, at least comprising at least all of the selected information (especially at least all available information about the second subregion or at least all information selected for transmission about the second subregion) about the second subregion, comprising recognized objects in the second subregion and a geometric description of the second subregion,
   ▪ Providing the first transmittable object message segment and the second transmittable object message segment to be sent via the communication network.

The participant can be equipped with sensors (f. ex radar, LIDAR, cameras, etc.), especially stationary sensors. The participant can obtain information about its surrounding region, such as object information, from these sensors. These information can be transmitted (e. g. via the collective perception service) to other ITS-Ss.

The participant can also receive object messages or object message segments, especially CPMs and/ or cooperative awareness messages (CAMs) and forward these object messages or object message segments to other ITS-Ss. Additionally or alternatively the participant may aggregate the information from received messages/ message segments in a new object message.

The participant may, for example, be understood to mean an Intelligent Transport Systems-Station (ITS-S), a road user such as a (motor) vehicle (such as a car, a truck, a bus, etc.), a bicycle, a pedestrian, a roadside unit, etc..

Roadside units are equipped with stationary sensors and they may obtain object information from mounted stationary sensors and broadcast detected objects via the object message to surrounding ITS-S.

The participant may receive and transmit information. In other words, the participant may acquire information for providing an object message for providing information about its surrounding region for other (receiving) participants, but the participant may also receive object messages or object message segments from other (transmitting) participants when acquiring information and for generating its surroundings model using the information of the surroundings of the other participants.

"The surrounding region of the participant" is an environment of the participant which may comprise free space areas and/ or objects, such as, for example infrastructure elements, pedestrians, other vehicles or ITS-Ss, bicycles, etc.. The surrounding region of the participant is an area which at least partially surrounds the participant. Especially the surrounding region describes an area in which the participant is operating, such as, for example, staying, moving, driving, etc.."

"Selected information about the region" may be understood in that way that these information comprise all available information about the region or at least a subset of the information about the region selected for transmission. An object from a list of recognized objects of the participant may be selected for transmission, e.g., based on its confidence level, on redundancy of the information and on further criteria, such as, for example, an object class, time of perception, etc.. Standards and associated profiles may specify the scenario-related requirements for the object selection.

For example, the step acquiring selected information may comprise further steps:
- Receiving all available information about the surrounding region, whereby "all available information" comprise all information provided by e. g. the sensor system, other participants (in other words: object messages transmitted by other participants), etc.. Especially, "all available information" comprise all received information before selection.
- Selecting information from all available information about the surrounding region for transmission, in other words selecting a subset of information of all available information. The selected information/ the subset of information correspond to the acquired information about the surrounding region, then.
- Alternatively, all available information may be selected for transmission. All available information correspond to the selected information about the surrounding region and consequently to the acquired information, then.

"All of the selected information about the subregion" may be understood in that way that each recognized object comprised in the selected information of the surrounding region is linked to a geographic location in the surrounding region. When segmenting the region into at least the first and the second subregion, all of the selected recognized objects whose geographical location lies within the subregion are provided for transmission in the object message segment associated with the subregion.

"Completeness of a (sub)region" may be understood as the availability of all information for a sub(region) following the selection rules.

It is advantageous to provide and send all of the selected information about the (sub)region in a single object message (segment) because the receiver of the object message (segment) may then assume the data for the received (sub)region to be complete. This improves the robustness of the application against lost segment packets using the information of the object message (segment), such as, for example, generating a surroundings model.

The communication network, especially a vehicular communication network, comprises a network for traffic linking, for example a V2X communication mechanism. The transmittable object messages or transmittable object message segments may be transmitted via a communication link, especially a wireless communication link, such as, for example, a DSRC (Direct Short Range Communication) or other Wi-Fi, Bluetooth, or C-V2X (Cellular V2X) or other mobile communication link, between users of the communication network. The participant is connected to other participants via the communication network.

For example, the step acquiring information about the surrounding region may comprise a step providing a list of recognized objects. This step can be carried out by an object fusion system, for example. Sensors mounted to the participant are providing raw sensor data as a result of their measurements which may be used by a sensor specific object fusion system to provide a list of recognized objects as detected by the measurement of the sensors. The measured sensor data (raw sensor data) is specific to a sensor type (e.g. reflexions, time of flight, point clouds, camera image, etc.). In the context of perception of a surrounding region, this data is usually evaluated by sensor-specific analysis processes to detect and compute a mathematical representation for a recognized object. The object fusion system may provide and maintain a list of recognized objects that are currently perceived by the participant. The object fusion mechanism may
- predict each object at times at which no measurement is available from the sensors.
- associate objects from other potential sensors mounted to the participant or received from other participants with objects in the tracking list; and
- merge the prediction and an updated measurement for an object.

Therefore, at each point in time, the object fusion system can provide an updated list of recognized objects. The list of recognized objects may also be provided in the form of an occupancy grid.

Further information from other participants (such as e. g. CPMs or CAMs) may additionally be fused with the locally perceived information. In other words, the information about the surrounding region may comprise information obtained from various sources, such as e. g. information of a sensor system of the participant, information or object messages received from other ITS, etc..

The object fusion system may add new objects to the list of recognized objects and it may update objects that are already tracked by the object fusion system. Besides the object fusion system may remove objects from the list of recognized objects if new measurements cannot be associated to already tracked objects.

Object fusion may be performed either by an individual sensor, or by a high-level data fusion process.

The object fusion system may also classify recognized objects.

If no objects are detected or selected for transmission, the list of recognized objects may be an empty list and the participant may still generate an object message periodically to report that it is able to detect and share objects and that no objects were currently recognized.

Recognized objects may be other participants, vehicles, ITS, pedestrians, infrastructure elements, etc.. The recognized objects may be relevant for traffic safety, especially they may either be static, i.e., do not move but are located on the driving lanes, or dynamic, i.e., move or have the ability to move.

For example, objects may only be assigned to one subregion. In the case of nesting, the object is described in the lowest (innermost) subregion and is implicitly also contained in subregions containing this subregion. Alternatively, objects can be contained in several subregions if the subregions are nested or overlapping. It may be specified in standards and profiles or communicated in the object message segments which one of these possibilities applies.

In the case of (non-nested) overlap of the subregions, the completeness (containing all information of a subregion following the selection rules) of the regions is an objective of this invention. Objects should then even be transferred in several object message segments so that there is no incompleteness in any subregion. Often, overlaps (not nested) can be avoided. For example, it can be useful at a four-way intersection, where a Roadside Unit wants to assist an automated connected vehicle it can be beneficial to make four subregions but overlap all four regions in the intersection center, so that negative effects at the borders of non-overlapping subregions can be mitigated.

Compared to the non-region-bound segmentation, a binding completeness is achieved by the region-bound segmentation of the invention. Additionally, the receiver of the object message segment can clearly determine which regions are up-to-date and fully known to him based on the (sub)regions received.

Advantageously, the subregions can be adapted to the current traffic situation and subregions can be suitably chosen so that they can be filled into individual transmittable message segments.

The object message may be transmitted as one object message segment if it does not exceed the maximum size. If the calculated or estimated data size of the object message exceeds the given maximum data size, the object message cannot be transmitted as a whole. Therefore, the information about the surrounding region which should have been aggregated in the object message are segmented into information segments where each information segment comprises all selected information about at least one subregion. In other words, each information segment comprises all selected information about the related subregion, in other words all information that are selected for transmission via the communication network. Based on these information transmittable message segments are generated. In other words, object message segments with reduced size compared to the original object message, comprising the information about one or more whole subregion(s), are generated. They are generated in that way that the size of each message segment is e. g. less than or equal to the given maximum data size so that each object message segment can be transmitted or sent via the communication network as a whole. Each object message segment comprises all selected information about the related subregion. In other words, each object message segment comprises all selected information about the related subregion, in other words all information that are selected for transmission via the communication network.

Each transmittable object message segment comprises information about the disseminating participant itself, information about the related subregion(s), such as a geometric description of the related subregion and data categories detected in the region, such as objects, free spaces, trajectories, grid descriptions, properties of the road/environment (e. g. smooth surface, fog, etc.) as well as further data from the/to the region and possibly subregions contained in the region (nesting, also complete).

Furthermore, each transmittable object message segment can comprise
- a header,
- information about the participant, comprising information about at least some of the following: the at least one sensor of the participant, generation time, station type, reference position, different parameters such as steering angle, position, direction, or velocity of the participant and dynamic information of the sending participant (e. g. heading, speed, acceleration, yaw rate), etc.
- sensor information, such as description of a perception capability of the transmitting participant, such as a field of vision or a range of the sensors and
- at least some of the following information about the surrounding region of the participant such as
   ▪ a list of recognized (perceived) objects, whereby the recognized objects can be described by different parameter, such as e. g. a position, a location, a velocity, a size, an object class, or timing, position and attitude information for the detected objects, a 3D representation of objects relative to the sender, along with a correlation matrix, etc. and
   ▪ additional information about monitored free space areas known to the transmitting ITS-S.

The geometry of the subregions is chosen in such a way that all selected information (especially all available information about the subregion or at least all information about the subregion selected for transmission) about the subregion fit into the transmittable object message segment which can be transmitted as a whole.

"Generating a transmittable object message segment" may be understood to mean generating an object message segment in that way that the size of the object message segment is less than the given maximum data size so that the object message segment can be transmitted or sent via the communication network as a whole. To meet this criterion, the following steps can be performed in one embodiment:
- calculating or estimating the data size of the object message segment, comprising all of the selected information about the related subregion,
- comparing the calculated or estimated data size of the object message segment with the given maximum data size,
- if the calculated or estimated data size of the object message segment exceeds the given maximum data size:
   ▪ Segmentation of the subregion into at least a new first subregion and a new second subregion,
   ▪ The segmentation may reuse previously computed subregions to reduce the changes of subregions over time.

These steps can be repeated until the criterion is met. In other words, these steps can be repeated until the generated object message segment is transmittable. If the data size of the object message segment exceeds the given maximum data size the object segment is not transmittable.

"Generating a transmittable object message segment" may also be understood to mean that after segmenting the object message, each object message segment comprising the selected information about the associated subregion has a specific data size and if the sum of the data sizes of at least two object message segments, each comprising a single subregion, is less than the given maximum data size, these object message segments may be merged into a single transmittable object message segment, comprising the selected information about the associated subregions.

The goal of the segmentation is that (at least) one subregion fits into one object message segment, including the associated surroundings model. The maximum size of an object message segment can be static or may be dependent on the protocol stack and transmit technology used per packet and other factors such as the current channel load, the other packets to be sent by the participant and their priorities, as well as the relevance of the data of the object message segment. For a given (sub)region, it can be estimated or calculated (e.g., by performing the corresponding encoding of the data for transmission on a test basis), how large the corresponding amount of data for transmission of the region would be.

If the (sub)region already fits completely into an object message segment, no adjustment is required. If necessary, additional (sub)regions can be included in the object message segment if they completely fit into the object message segment. In other words, an object message segment can also comprise more than one subregion, if the data size of the object message segment comprising additional subregions, does not exceed the given maximum data size.

If the region is too large, it must be divided into new subregions until each subregion completely fits into a message segment or alternatively a complete restructuring of all (sub)regions can be done, e.g., from three to four (sub)regions. When cutting these regions, the desired maximum size can also be used as a cutting criterion.

It can be an advantage if the geometry of the (sub)regions is maintained from message to message in the best possible way. After all, the receiver can then most easily compensate for a lost segment using previously received data for this (sub)region.

(Sub)regions may have a static geometry if they fit into an object message segment. Alternatively, their geometry can be dynamically adapted, especially with moving vehicles. However, parts of the sensor area could also be treated as static for a limited time and supplemented by dynamic (sub)regions.

Object message segments are created in such a way that each message segment comprises a complete surroundings model of one or more subregions. When a segment is received, a receiver can therefore consider the information contained therein about the contained subregion complete and thus the receiver has sufficient information for the subregion. This increases the reliability and the availability of the system. If a transmitted message segment is lost, the receiver does not receive up-to-date information about the associated subregion. The receiver can then continue working with the previous data of the subregion or save the subregion as insufficiently recorded if the available data are no longer sufficiently up to date.

Suitable rules for calculating subregions are used to ensure that the subregions can be completely transferred in one object message segment and that the data can be distributed across segments in such a way that very large message segments (i.e., close to the maximum size) are avoided.

Criteria for segmentation of the region could be:
- Subregions defined by different sensor detection areas rather static geometries in the case of infrastructure, such as a roadside unit, regions or geometries that are static in relation to the mobile participant (changes relative to the environment) when using a mobile sensor/vehicle/participant.
- based on the perception quality in an area if regions indicate the perception quality in that region.
- based on a tile system on the coordinate system of the region (static, comparable to tiles of the NDS (Navigation Data Standards)).
- a similarity regarding the content of a single (sub)region (e. g. empty).
- division into several subregions that are comparable to each other, e.g.:
   ∘ Balanced distribution of road users across regions.
   ∘ Regions with similar area.
- Region with inherently similar semantic characteristics (map information), e.g.:
   ∘ cutting of regions to individual lanes, sidewalks, parking areas, etc.
   ∘ In combination with other criteria: (mostly) empty parking spaces individually or grouped in a region, (mostly) occupied parking spaces separately.
   ∘ Pedestrian crossing as a separate region.
- Based on regions received from other participants, to provide similar or equal regions in the message segments transmitted afterwards. This could then reduce the computational efforts to fuse surrounding models received from different participants.

While generating subregions, a subregion identifier might be added to link objects to the associated subregion or to support the receivers in the processing of subregions. A subregion should then keep the same identifier, if the geometry of the subregion has not changed, and get a new identifier, if the subregion has changed. Instead, or additional to linking objects to a subregion identifier, the subregions may also contain a link to the contained objects (object identifier).

The subregions of the segmentation step can mutually exclude each other, i.e., no overlaps, no nesting of regions. Alternatively, at least two subregions of the segmentation step can be nested. Alternatively, at least two subregions of the segmentation step can be overlapping so that information redundancy occurs at the boundaries.

For example, the object message and the transmittable first and second object message segments are collective perception messages (CPMs).

The geometric description of the region or subregion can comprise, e.g., definitions of polygons, rectangles, squares, hexagons or similar structures which can comprise multiple point definitions or a centerpoint and a width and/or height.

The "Given maximum data size" may, e. g., depend on the maximum transmission unit. Especially, the given maximum data size is less than or equal to the maximum transmission unit (MTU) of the access layer technology over which the object message should be transported, possibly reduced by protocol overhead. The given maximum data size is usually determined by the MTU (minus overhead by packet format etc.) but can be selected lower for technical reasons (e.g., to increase the transmission probability).

Advantageously, the object message segments can be constructed with similar sizes, as this leads to a similar reception probability for each of the object message segments.

The aforementioned method can be used to provide a Collective Perception Message.

According to an embodiment the method for providing an object message may also comprise a step: selecting at least one recognized object from the list of recognized objects and add the at least one recognized object to the object message.

According to an embodiment a transmittable object message, comprising the selected information about the surrounding region (especially all available information about the surrounding region or at least a subset of the selected information about the surrounding region selected for transmission), is generated and provided to be sent via the communication network, if the calculated or estimated data size of the object message is less than or equal to the given maximum data size.

According to an embodiment the transmittable object message or the transmittable object message segments are sent via the communication network.

According to an embodiment the dynamic given maximum data size depends on protocol stack and the transmit technology It is an advantage of this embodiment that it allows to send data reliably, since the size of the data packets can be constantly adapted to the currently available data size for transmission.

A method for generating a surroundings model of a participant comprises the following steps:
- Receiving the object message comprising the selected information about the region, comprising recognized objects in the region and a geometric description of the region or the object message segment comprising all of the selected information about the subregion, comprising recognized objects in the subregion and a geometric description of the subregion, provided by the method for providing the object message.
- Verifying if the received message or the received message segment is valid.
- Storing the received message or the received message segment with a time stamp if the received message or the received message segment is valid.
- Storing the information about the region or the information about the subregion of the valid message or valid message segment comprising an identifier.
- Generating the surroundings model of the participant based on the stored information.

Especially the participant is a receiving participant that receives object messages and/or object message segments provided by other/ transmitting participants. The participant may receive and transmit information. In other words, the participant may receive object messages or object message segments from other (transmitting) participants for generating its surroundings model using the information of the surroundings of the other participants, but the participant may also acquire information for providing an object message. An advantage is that the receiving participant receives more information about its surroundings because other participant might perceive objects the sensor system did not detect, as the view of the object is obscured by another object. So, the use of the object messages or object message segments sent by other participants increases the reliability of the surroundings model.

V2X communication makes it possible to improve a surroundings model by supplementation with information/ data from incoming V2X messages. These messages may comprise information about an ego-vehicle and its sensors as well as a list of recognized objects.

It is an advantage of the method that by using the object message or object message segments, comprising all of the selected information about the associated region or subregion, the participant may reliably calculate a complete surroundings model of any region, because each received object message or object message segment comprises all of the selected information about the corresponding region or subregion. If an object message or object message segments gets lost, the participant is aware of the missing data of the associated regions or subregions. Thus, the reliability of the surroundings model and the safety when using the surroundings model, for example for (partially) autonomous driving, can be increased.

A surroundings model may be a modeled three-dimensional representation of the surroundings of the participant. In other words, the surroundings model may be a dynamic data structure, in which relevant recognized objects, such as, for example, other vehicles, pedestrians or infrastructure elements, may be represented in a shared reference system with the participant in location and time. The surroundings model may comprise a virtual traffic environment of the participant considering for example other road users and obstacles as well as a free space indication, road marking recognition, recognition of traffic signs, localization of the participant on the map, information from and about sensors, such as radar, LIDAR and/or video.

For example, the participant may be understood to mean an Intelligent Transport Systems-Station (ITS-S), a road user such as a (motor) vehicle (such as a car, a truck, a bus, etc.), a bicycle, a pedestrian, a roadside unit, etc..

The objective of the receiver is to know the validity and completeness of the received object message or object message segment.

The step "Verifying if the received message or the received message segment is valid" may be understood in that way that the receiver first checks the correctness and validity of the segment, e.g., by means of checksums, sender certificates, time stamps, etc.. Invalid and faulty segments may be discarded after receiving the object message or object message segment.

For each region or subregion of a valid message or valid message segment, the receiver performs the following:
- Optional: The receiver checks the received region or subregion for relevance to the receiver. If the region is irrelevant, it can be discarded..
- The receiver saves the received region (in particular the geometrical description) together with an identifier and with a time stamp. The time stamp can be generated on receipt and/or may be part of the received message or message segment.
- The receiver saves the data received for this region or subregion (objects, free spaces, etc.). For example, the data can be linked to the corresponding (sub)region using the identifier and time stamp.

Outdated regions or subregions can be identified and deleted, e.g., by means of time stamps:
- The datasets associated with the deleted region/ subregion (and no other region/subregion) can be deleted simultaneously.
- Alternatively (if no link is used), datasets can be deleted based on their time stamps. It should be ensured that datasets are not deleted before the associated region/ subregion is deleted, as this region/ subregion would then be incomplete in the receiver.

Outdated regions can be identified, e.g., periodically, when receiving new information or when using the stored information.

During the further processing of the objects in an application, the current position of objects can then be estimated based on previous data and their time stamps. (It may happen that objects move to another region/ subregion.)

By storing previous regions/ subregions including their geometric description, the receiver can
- access one or more previously obtained regions/ subregions (e. g. if an object message segment is lost), as long as they are valid. The regions/ subregions do not need to be congruent, since the receiver knows how the respective region/ subregion is geometrically cut.
- determine at any time whether a specific region/ subregion is covered by the received and still valid region/ subregion.

When linking different regions at different times, common prediction and fusion algorithms may be used to combine the differences into a consistent image. It is also possible to only use the latest version for all objects.

In this way, the receiver can always decide for which regions/ subregions complete and (still) valid information are available. And it can extract the still valid information from the received regions/subregions in order to generate a current view/ surroundings model from it.

A rather constant segmentation of the region over time is algorithmically advantageous, since a previously received subregion can be overwritten by an update of the same subregion. However, it is also possible to use the above-mentioned method for spatially static and spatially changing subregions.

According to an embodiment the step verifying if the received message or the received message segment is valid comprises further steps in order to prevent using outdated information::
- Verifying if the region of the received object message or the subregions of the received object message segment is outdated.
- Deleting the region and all information about the region if the region of the received message is outdated.
- Deleting the subregion and all information about the subregion if the subregion of the received message segment is outdated.

According to an embodiment a current position of objects in the surrounding region of the participant is estimated based on the stored information.

A further aspect of the invention is the use of the surroundings model generated by the method described above for controlling a vehicle, especially a (partially) autonomous driving vehicle.

A further aspect of the invention is message generation device for carrying out the method for providing the object message comprising
- a communication module for receiving the information about the surrounding region and for transmitting the information about the surrounding region to an evaluation unit,
- the evaluation unit
   ▪ for comparing the calculated or estimated data size of the object message, comprising the recognized objects, with the given maximum data size,
   ▪ for segmenting the surrounding region of the participant into at least the first subregion and the second subregion,
   ▪ for generating the first transmittable object message segment, the second transmittable object message segment and/or the transmittable object message,
   ▪ for providing the first transmittable object message segment, the second transmittable object message segment and/or the transmittable object message to be sent via the communication network.

According to an embodiment, the communication module may, e.g., be implemented in a vehicle Communication and Control Unit (CCU) or Onboard Unit (OBU) providing wireless communication links.

According to an embodiment, the evaluation unit may e.g., be implemented in a vehicle control unit or on a computation unit for automated driving (AD).

Advantages of the message generation device result directly from the advantages of the method for providing the object message.

According to an embodiment the message generation device comprises an object fusion system for evaluating the information about the surrounding region and for providing a list of recognized objects for the evaluation unit.

According to an embodiment the communication module is suitable for transferring the transmittable object message or object message segment directly via the communication network or indirectly by providing the transmittable object message or transmittable object message segments to other components using or forwarding the information to a connected device which provides the link to wireless or wired transmission technologies..

A further subject matter of the invention is a vehicle, especially a motor vehicle, comprising the message generation device.

A further subject matter of the invention is a computer program product implementing the method for providing the object message as described above, preferably via a communication network. The computer program product comprises instructions, which cause the message generation device to carry out the steps of the method for providing the object message as described before.

A further subject matter of the invention is a computer-readable data carrier having stored thereon the aforementioned computer program product.

Further features, advantages and effects of the invention will become apparent by the description of preferred embodiments of the invention and the figures as attached. The figures show:
Figure 1 a flow chart of a method for providing an object message comprising information about a surrounding region of a participant in a communication network,
Figure 2 a flow chart of a method for providing an object message comprising information about a surrounding region of a participant in a communication network,
Figure 3 a schematic drawing of the segmentation of the surrounding region according to a first embodiment,
Figure 4 a schematic drawing of the segmentation of the surrounding region according to a second embodiment,
Figure 5 a schematic drawing of the segmentation of the surrounding region according to a third embodiment,
Figure 6 a flow chart of a method for generating a surroundings model of a participant,
Figure 7 a flow chart of a method for generating a surroundings model of a participant,
Figure 8 a schematic drawing of a received subregion over time,
Figure 9 a schematic drawing of a surrounding region of a participant, and
Figure 10 a schematic drawing of a surrounding region of a participant.

### Embodiments of the invention

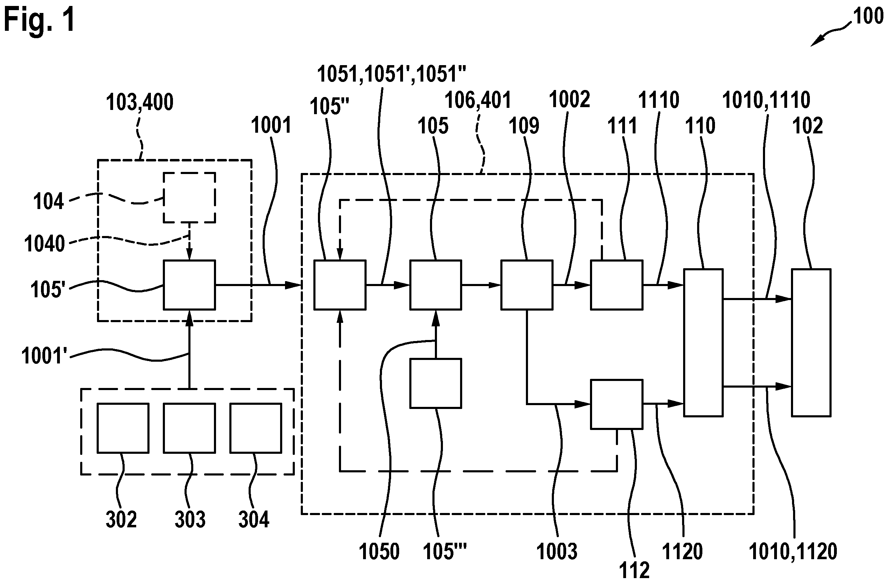

Fig. 1 depicts a flow chart of a method 100 for providing an object message, comprising information 1001 about a surrounding region of a participant, in a communication network 102. A transmittable object message 1010 is provided 110 to be sent via the communication network 102.

The participant, especially a communication module 400 of the participant, receives all available information 1001' about a surrounding region of the participant from various sources, for example from a sensor (system) 302 of the participant, messages from other transmitting participants, such as, for example object messages, collective perception messages (CPMs), collective awareness messages (CAMs), further information 304 such as for example map data, a geometric description of the surrounding region perceived by the participant, etc..

The communication module 400 is responsible for acquiring 103 information 1001 about the surrounding region. The communication module 400 receives all available information 1001'. The communication module may be an interface between the sensor system, the other sending sources, providing all available information 1001' about the surrounding region, and an evaluation unit 401. The communication module 400 may n also transmit the information selectively to the evaluation unit 401, if necessary. Therefore, the communication module may process the received information 1001' in order to select 105' information 1001 about the surrounding region for transmission via the network 102 because not all available information 1001' are relevant for other participants. The receiving participants may not need the raw sensor data of the sensor (system) if an object fusion system of the sensor (system) or of the communication module provides 104 and maintains a list 1040 of recognized objects that are currently perceived by the transmitting participant. In fig. 1 the object fusion system for providing 104 the list 1040 of recognized objects is part of the communication module 400. An object from the list 1040 of recognized objects of the participant with sufficient confidence level and not subject to redundancy mitigation techniques may be selected 105' for transmission as a result of the current object message generation event. The selection 105' for transmission may comprise further criteria, such as, for example, confidence of the object information, an object class, time of perception, etc..

The selected information correspond to the acquired information 1001 about the surrounding region, then.

The communication module 400 transmits the acquired information 1001 of the surrounding region to the evaluation unit 401 for providing 106 the transmittable object message 1010. The evaluation unit 401 is suitable to carry out the following steps:
▪ Determining 105", especially calculating or estimating, a calculated or estimated data size 1051 of the object message 101, comprising the information 1001 about the surrounding region,
▪ Comparing 105 the calculated or estimated data size 1051 of the object message 101 with a given maximum data size 1050,
▪ Segmenting 109 the surrounding region of the participant into at least the first subregion and the second subregion,
▪ Generating 111, 112 a first transmittable object message segment 1110, a second transmittable object message segment 1120 and/or the transmittable object message 1010,
▪ Providing 110 the first transmittable object message segment 1110, the second transmittable object message segment 1120 to be sent via the communication network 102.

The given maximum data size 1050 may be a static or dynamic parameter transmitted to, stored in and/or determined 105‴ in the evaluation unit 401. If the given maximum data size 1050 is a dynamic parameter it may depend on the protocol stack and the transmission technology. Especially, the given maximum data size is less than or equal to the maximum transmission unit of the access layer technology over which the object message 1010 should be transported.

In fig. 1 the calculated or estimated data size 1051 of the object message exceeds the given maximum data size 1050. Therefore, the method 100 for providing the object message 101 comprises the following steps:
- Segmentation 109 of the surrounding region of the participant into a first subregion and a second subregion. In other words, the surrounding region is cut into two subregions, here.
- Generating 111 a first transmittable object message segment 1110, comprising all of the selected information 1002 about the first subregion, comprising recognized objects in the first subregion and a geometric description of the first subregion in that way that the size of the object message segment 1110 is less than the given maximum data size 1050 so that the object message segment can be transmitted or sent via the communication network as a whole. To meet this criterion, the following steps may be performed:
   ▪ Determining 105", especially calculating or estimating, the data size 1051' of the object message segment, comprising all of the selected information 1002 about the related subregion,
   ▪ Comparing 105 the calculated or estimated data size 1051' of the object message segment with the given maximum data size 1050,
   ▪ if the calculated or estimated data size 1051' of the object message segment exceeds the given maximum data size 1050:
      ▪ Segmentation 109 of the subregion into at least a new first subregion and a new second subregion

These steps can be repeated for the new subregions until the criterion is met. In other words, these steps can be repeated until the generated object message segment 1110 is transmittable. If the data size 1051' of the object message segment exceeds the given maximum data size 1050 the object segment is not transmittable.
- Generating 112 a second transmittable object message segment 112, comprising all of the selected information (1003 about the second subregion, comprising recognized objects in the second subregion and a geometric description of the second subregion, subregion in that way that the size of the object message segment 1110 is less than the given maximum data size 1050 so that the object message segment can be transmitted or sent via the communication network as a whole. To meet this criterion, the following steps may be performed:
   ▪ Determining 105", especially calculating or estimating, the data size of the object message segment, comprising all of the selected information 1002 about the related subregion,
   ▪ Comparing 105 the calculated or estimated data size 1051" of the object message segment with the given maximum data size 1050,
   ▪ if the calculated or estimated data size 1051" of the object message segment exceeds the given maximum data size 1050:
      ▪ Segmentation 109 of the subregion into at least a new first subregion and a new second subregion

These steps can be repeated for the new subregions until the criterion is met. In other words, these steps can be repeated until the generated object message segment 1120 is transmittable. If the data size 1051" of the object message segment exceeds the given maximum data size 1050 the object segment is not transmittable.
- Providing 110 the first transmittable object message segment 1110 and the second transmittable object message segment 1120 to be sent via the communication network 102.

In this embodiment, the object message 101 comprises two object message segments 1110, 1120 which may be sent one after the other via the communication network. In particular the object message segments 1110, 1120 are Collective Perception Messages.

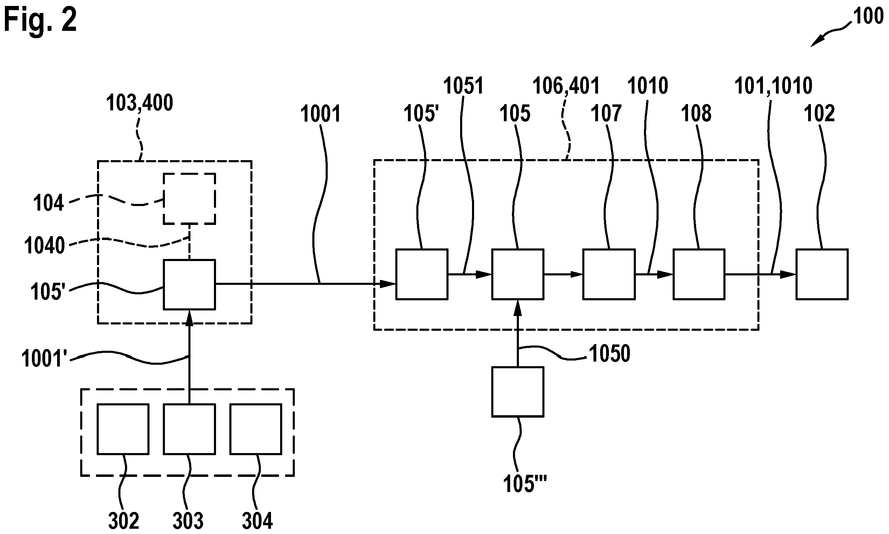

Fig. 2 shows a flow chart of a method 100 for providing an object message 101, comprising information 1001 about a surrounding region of a participant, in a communication network 102. The flow chart is the same as fig. 1 but it differs in the process steps following the comparing step 105. In fig. 2 the calculated or estimated data size 1051 of the object message 101 is less than or equal to the given maximum data size 1050 whereas in fig. 1 the calculated or estimated data size 1051 of the object message 101 exceeds the given maximum data size 1050. Therefore, the method 100 for providing the object message 101 comprises the following steps: The transmittable object message 1010, comprising the information 1001 about the surrounding region 300, is generated 107, and provided 108 to be sent via the communication network 102.

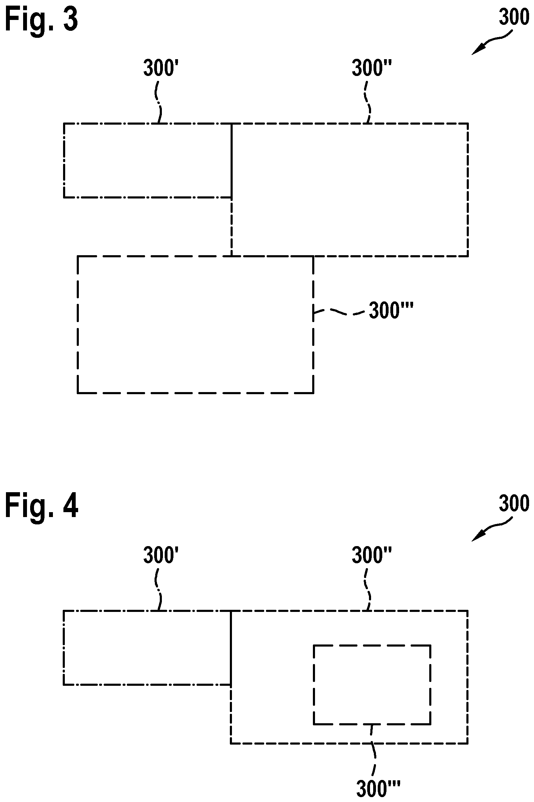

Figures 3, 4 and 5 various region topologies of the surrounding region 300. Exemplarily the surrounding region 300 is segmented into three subregions 300', 300", 300‴ but it is not limited to three subregions 300', 300", 300‴. The surrounding region 300 may be segmented into at least two subregions.

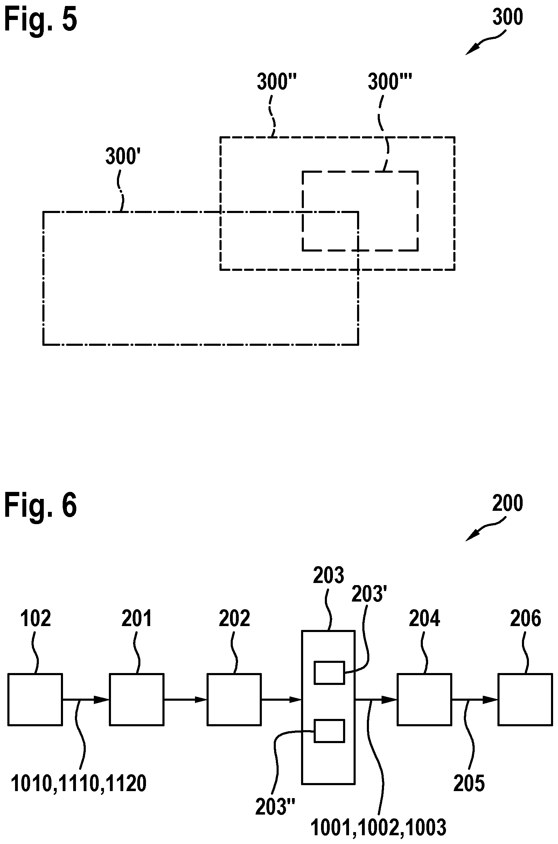

Fig. 3 shows a schematic drawing of three subregions 300', 300", 300‴ forming the surrounding region 300. The subregions 300', 300", 300'" mutually exclude each other, i.e., they have no overlaps, no nesting of regions. As can be seen in fig. 4 the subregions 300', 300", 300‴ may be nested, then it is possible to transfer elements of the inner subregion (here the third subregion 300‴) in the same object message segment as the second subregion 300" or to declare this clearly defined sub-area (third subregion 300‴) in the second subregion 300" and transmit it separately in another object message segment. As shown in fig. 5 the subregions 300', 300", 300‴ may be overlapping so that information redundancy occurs at the borderline.

Objects contained in overlapping areas (in 300' and 300") should be sent with both regions to keep the completeness of the regions if the regions are transmitted in different message segments.

Fig. 6 shows a flow chart of a method 200 for generating a surroundings model of a participant, especially a receiving participant receiving information sent by other (transmitting) participants via the communication network 102. The method comprises the following steps:
- Receiving 201 the object message 1010 comprising the acquired information 1001 about the surrounding region 300, comprising recognized objects in the surrounding region 300 and a geometric description of the surrounding region 300 or the object message segment 1110, 1120 comprising all of the selected information 1002, 1003 about the subregion 300', 300", comprising recognized objects in the subregion 300', 300" and a geometric description of the subregion 300', 300", provided by the method 100 for providing the object message 101 such as for example shown in fig. 1 or fig. 2;
- Verifying 202 if the received object message 1010 or the received object message segment 1110, 1120 is valid.
- Storing 203' contents 1001 of the received object message 1010 or the contents 1002, 1003 of the received object message segment 1110, 1120 with a time stamp if the received object message 1010 or the received object message segment 1110, 1120 is valid.
- Storing 203" the information 1001 about the region 300 or the information 1002, 1003 about the subregion 300', 300" of the valid object message 1010 or valid object message segment 1110, 1120 comprising an identifier.
- Generating 204 the surroundings model 205 of the participant based on the stored information 1001, 1002, 1003.

Especially a current position of objects in the surrounding region 300 of the participant 305 is estimated based on the stored information 1001, 1002, 1003. The surroundings model 205 may be used for controlling a vehicle 206 such as for example a (partially) autonomous driving vehicle.

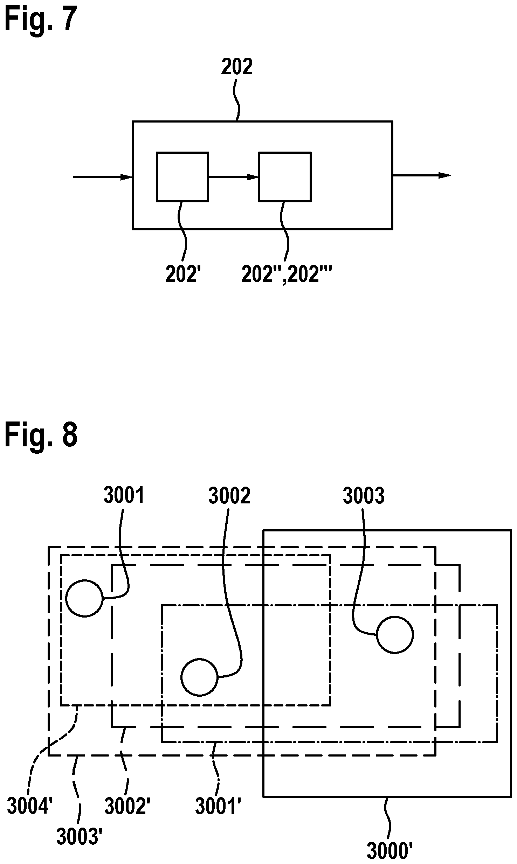

Fig. 7 shows an embodiment of the step Verifying 202 if the received object message 1010 or the received object message segment 1110, 1120 is valid. This step comprises:
- Verifying 202' if the region 300 of the received object message 1010 or the subregions 300', 300" of the received object message segment 1110, 1120 is outdated.
- Deleting 202" the region 300 and all information 1001 about the region 300 if the region 300 of the received message 1010 is outdated.
- Deleting 202‴ the subregion 300', 300" and all information 1002, 1003 about the subregion 300', 300" if the subregion 300', 300" of the received message segment 1110, 1120 is outdated.

Fig. 8 shows a schematic drawing of a received subregion 3000' at time t over time. The geometry and consequently the geometric description of the subregion 3000' changes over time. There are three objects 3001, 3002, 3003 in the environment of the participant. By following the steps of the method 200 of fig. 6 the receiver can always decide for which regions/ subregions complete and (still) valid information are available. And the receiver can extract the still valid information from the received regions/subregions in order to generate a current view/ surroundings model 205 from it.

Fig. 8 shows a schematic drawing of how the receiver deals with subregions if the transmitting participant adapts the geometric layout of the subregions. In the fig. 8, the subregion at time t 3000', the subregion at time t-1 3001', the subregion at time t-2 3002' and the subregion at time t-3 3003' represent a subregion received in the corresponding time step, from old (subregion at t-3 3003') to new (subregion at t 3000'). The subregion at time x 3004' is a region required by the receiver. For simplification, only one subregion per time step is drawn, but several (at least two) subregions per time step are possible in terms of the invention. On the one hand, the data from the previously received region are still available, even if this detail is no longer part of the newer region. For example, in fig. 8, the first object 3001 exists as long as the subregion 3003' at time t-3 remains valid, the second object 3002 is linked to the subregion 3001' at time t-1 and becomes outdated with this subregion 3001'.

On the other hand, the receiver can determine at any time whether a specific target subregion 3004' is covered. In the example, this is the case until the subregion 3003' at time t-3 is obsolete and deleted.

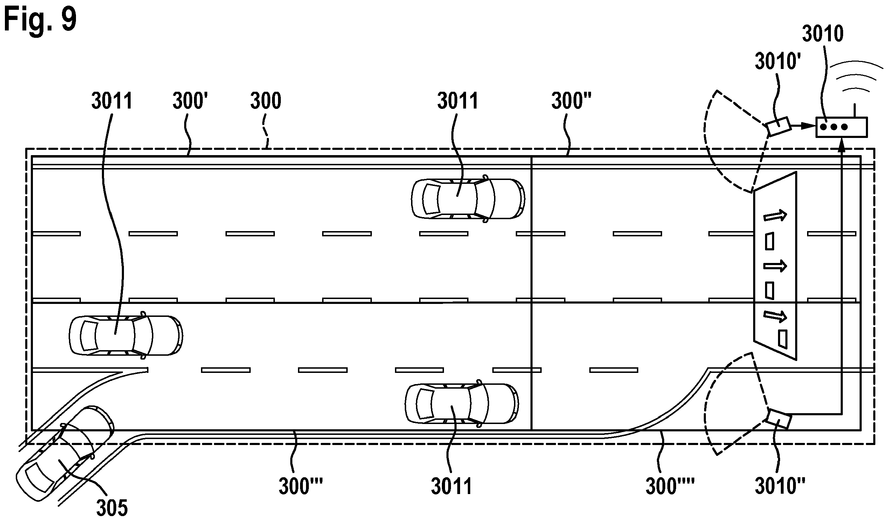

Fig. 9 depicts a schematic drawing of a traffic situation viewed from above. A surrounding region 300 of a receiving vehicle 305 (here a car) is segmented into four subregions (300', 300", 300‴, 300""). Besides there is a roadside unit (infrastructure stations) 3010, comprising two cameras 3010', 3010" which are monitoring the traffic situation. The roadside unit 3010 transmits subregions of the monitored traffic situation with some of them including unconnected vehicles 3011, as object messages 101 via the communication network. The receiving vehicle 305 receives at least some of the provided object messages 101.

If some data packets are lost, the receiving vehicle 305 only needs the segment of the object message 101 in which the third subregion 300'" is contained. The other subregions 300'. 300", 300"" are not yet required, which improves the availability of the system.

In another embodiment of Fig. 9 the three vehicles 3011 are also connected and sharing information about themselves as, e.g., CAMs or their perceived surroundings as object messages. This additional information can be received by the roadside unit 3010 and integrated into its surrounding model or the receiving vehicle 305 can receive it.

In each time step, the transmitting participant 301 transmits the four subregions 300', 300", 300‴, 300"" with current data. Due to the independence of the subregions 300', 300", 300‴, 300"", the receiver always receives complete subregions (marked with *) or does not receive the corresponding subregion (marked with X). In the following table there are times t1 to t7 and the current data for each subregion 300', 300", 300‴, 300"":

| | | | | |
|---|---|---|---|---|
| t₁ | *First subregion (t₁) | X | X | *Fourth subregion (t₁) |
| t2 | X First subregion (t₁) | *Second subregion (t2) | *Third subregion (t2) | *Fourth subregion (t2) |
| t3 | *First subregion (t3) | X Second subregion (t2) | *Third subregion (t3) | X Fourth subregion (t2) |
| t4 | X First subregion (t3) | *Second subregion (t4) | X Third subregion (t3) | *Fourth subregion (t4) |
| t₅ | *First subregion (t₅) | X Second subregion (t4) | X Third subregion (t3) | *Fourth subregion (t₅) |
| t6 | X First subregion (t₅) | X Second subregion (t4) | *Third subregion (t6) | X Fourth subregion (t₅) |
| t₇ | X First subregion (t₅) | X | *Third subregion (t7) | X Fourth subregion (t₅) |

From time t2, the receiver can then access previously received data of the missing subregions 300', 300", 300‴, 300"". For example, at t2 the receiver can use the data of the first subregion 300' from time step t1 because the receiver did not receive current data of the first subregion 300'. Only if the available data are too old - e.g., second subregion 300" in t7 - the receiver may no longer use the outdated data and may classify the region as unavailable. How long the previously received data of a subregion can be used and how their age is incorporated into the quality of the data depends on the function or the application.

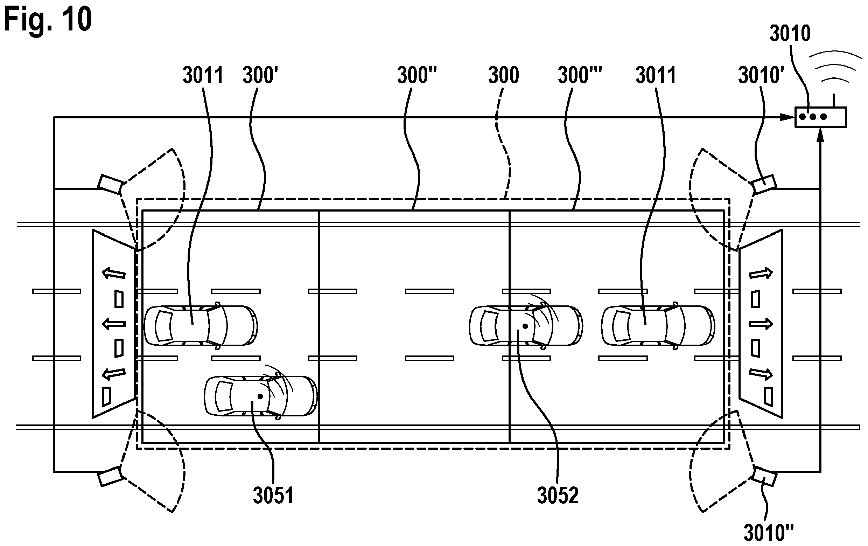

Fig. 10 depicts a schematic drawing of another traffic situation viewed from above. A surrounding region 300 of a receiving first receiving vehicle 3051 (here a car) and a second receiving vehicle 3052 is segmented into three subregions (300', 300", 300‴, 300"").The first receiving vehicle 3051 requires, for example, only the segment with the first subregion 300' and possibly the second subregion 300" for a lane change, depending on how the ego-sensors of the vehicle 3051 are designed. The second receiving vehicle 3052 only needs the third subregion 300‴ and, if it wants to change lanes, the second subregion 300" to have traffic coming from behind in its surroundings model.

## Claims

1. Method (100) for providing an object message (101), comprising selected information (1001) about a surrounding region (300) of a participant (301), in a communication network (102) comprising the following steps:
• acquiring (103) the selected information (1001) about the surrounding region (300), especially sensor data,
**characterized in that** a step providing (106) a transmittable object message (1010) comprises the following steps:
• Comparing (105) a calculated or estimated data size (1051) of the object message (101), comprising the selected information (1001) about the surrounding region (300), with a given maximum data size (1050) of the transmittable object message (1010),
• if the calculated or estimated data size (1051) of the object message (101) exceeds the given maximum data size (1050), the method (100) comprises the following steps:
▪ Segmentation (109) of the surrounding region (300) of the participant (301) into at least a first subregion (300') and a second subregion (300"),
▪ Generating (111) a first transmittable object message segment (1110), at least comprising all of the selected information (1002) about the first subregion (300'), comprising recognized objects in the first subregion (300') and a geometric description of the first subregion (300'),
▪ Generating (112) a second transmittable object message segment (1120), at least comprising all of the selected information (1003) about the second subregion (300"), comprising recognized objects in the second subregion (300") and a geometric description of the second subregion (300"),
▪ Providing (110) the first transmittable object message segment (1110) and the second transmittable object message segment (1120) to be sent via the communication network (102).

2. Method (100) according to claim 1 **characterized in that** if the calculated or estimated data size (1051) of the object message is less than or equal to the given maximum data size (1050), the transmittable object message (1010), comprising the selected information (1001) about the surrounding region (300), is generated (107), and provided (108) to be sent via the communication network (102).

3. Method (100) according to one of the preceding claims, **characterized in that** the transmittable object message (1010) of claim 2 or the transmittable object message segments (1110, 1120) of claim 1 are sent via the communication network (102).

4. Method (100) according to one of the preceding claims, **characterized in that** the given maximum data size (1050) is a static parameter.

5. Method (100) according to one of the preceding claims, **characterized in that** the given maximum data (1050) size is a dynamic parameter

6. Method (100) according to claim 5, **characterized in that** the dynamic given maximum data size (1050) depends on the protocol stack and the transmission technology.

7. Method (200) for generating a surroundings model of a participant (305) comprising the following steps:
• Receiving (201) the object message (1010) comprising the selected information (1001) about the surrounding region (300), comprising recognized objects in the surrounding region (300) and a geometric description of the surrounding region (300) or the object message segment (1110, 1120) comprising all of the selected information (1002, 1003) about the subregion (300' 300"), comprising recognized objects in the subregion (300' 300") and a geometric description of the subregion (300' 300"), provided by the method (100) according to one of the preceding claims,
• Verifying (202) if the received object message (1010) or the received object message segment (1110, 1120) is valid,
• Storing (203') the received object message (1010) or the received object message segment (1110, 1120) with a time stamp if the received object message (1010) or the received object message segment (1110, 1120) is valid,
• Storing (203") the selected information (1001) about the region (300) or all of the selected information (1002, 1003) about the subregion (300' 300") of the valid object message (1010) or valid object message segment (1110, 1120) comprising an identifier,
• Generating (204) the surroundings model (205) of the participant (305) based on the stored information (1001, 1002, 1003).

8. Method (200) according to claim 7, wherein the step verifying (202) if the received message (1010) or the received message segment (1110, 1120) is valid comprises further steps:
• Verifying (202') if the region (300) of the received object message (1010) or the subregions (300', 300") of the received object message segment (1110, 1120) is outdated,
• Deleting (202") the region (300) and all information (1001) about the region (300) if the region (300) of the received message (1010) is outdated,
• Deleting (202‴) the subregion (300', 300") and all information (1002, 1003) about the subregion (300', 300") if the subregion (300', 300") of the received message segment (1110, 1120) is outdated.

9. Method according to one of the claims 7 or 8, wherein a current position of objects in the surrounding region (300) of the participant (305) is estimated based on the stored information (1001, 1002, 1003).

10. Use of the surroundings model (205) generated by the method (200) according to one of the claims 7 to 9 for controlling a vehicle (206).

11. Message generation device for carrying out the method (100) of one of the claims 1 to 6 comprising
• a communication module (400) for receiving information (1001') about the surrounding region (300), for acquiring the selected information (1001) and for transmitting the selected information (1001) about the surrounding region (300) to an evaluation unit (401),
• the evaluation unit (401)
▪ for comparing (105) the calculated or estimated data size (1051) of the object message (101), comprising the selected information (1001) about the surrounding region (300), with the given maximum data size (1050),
▪ for segmenting (109) the surrounding region of the participant (301) into at least the first subregion (300') and the second subregion (300"),
▪ for generating (111, 112) the first transmittable object message segment (1110), the second transmittable object message segment (1120) and/or the transmittable object message (1010),
▪ for providing (110, 108) the first transmittable object message segment (1110), the second transmittable object message segment (1120) and/or the transmittable object message (1010) to be sent via the communication network (102).

12. Message generation device according to claim 10 wherein the communication module (400) is suitable for transferring the transmittable object message (1010) or object message segment (1110, 1120) directly or indirectly via the communication network (102).

13. Vehicle (206) comprising a message generation device according to one of the claims 11 or 12.

14. A computer program product comprising instructions, which cause the message generation device of one of the claims 11 or 12 to carry out the steps of the method (100) of one of the claims 1 to 6.

15. A computer-readable data carrier having stored thereon the computer program product of claim 14.
